# EUROPEAN PATENT APPLICATION

(11) **EP 1 229 633 A1**
(43) Date of publication of application: **07.08.2002**
(21) Application number: 01300953.5
(22) Date of filing: 02.02.2001
(51) Int. Cl.: H02M 1/00

(54) **Switching power factor correction apparatus and method thereof**

(71) Applicant: ADI Corporation, Kuanghwa Li, Tai Pin City (TW)
(72) Inventor: Ho, Ping-Huang, Tai pei City (TW)
(74) Representative: Pratt, David Martin

(57) **Abstract**

The present invention generally relates to a switching power factor correction apparatus and method thereof, in which the connection configuration between two inductors is automatically switched according to different input voltage levels so as to achieve power factor correction of the corresponding total inductance. Said switching power factor correction apparatus comprises an inductor set, a switching device and a source voltage detection device, wherein said source voltage detection device receives an input voltage and is connected to said switching device at the output terminal, and is used to detect the value of said input voltage and output different electric signals to said switching device according to the value of said input AC voltage, wherein said switching device switches the corresponding connection configurations according to the electric signals so that said two inductors of said inductor set are switched from being connected in parallel to being connected serially or from being connected serially to being connected in parallel, thereby obtaining a desirable inductance value. Therefore, according to the present invention, the inductor device does not need to be replaced for different input AC voltages provided in different regions. Such a switching power factor correction apparatus according to the present invention is suitable for AC high-frequency harmonic suppression, EMI elimination, downsizing and fabrication cost reduction.

## Description

### BACKGROUND OF THE INVENTION

### 1. Field of the Invention

The present invention generally relates to a switching power factor correction apparatus and method thereof, and more particularly, to an apparatus and method thereof, in which the connection configuration between two inductors is automatically switched according to different input voltage levels so as to achieve power factor correction of the corresponding total inductance.

### 2. Description of the Prior Art

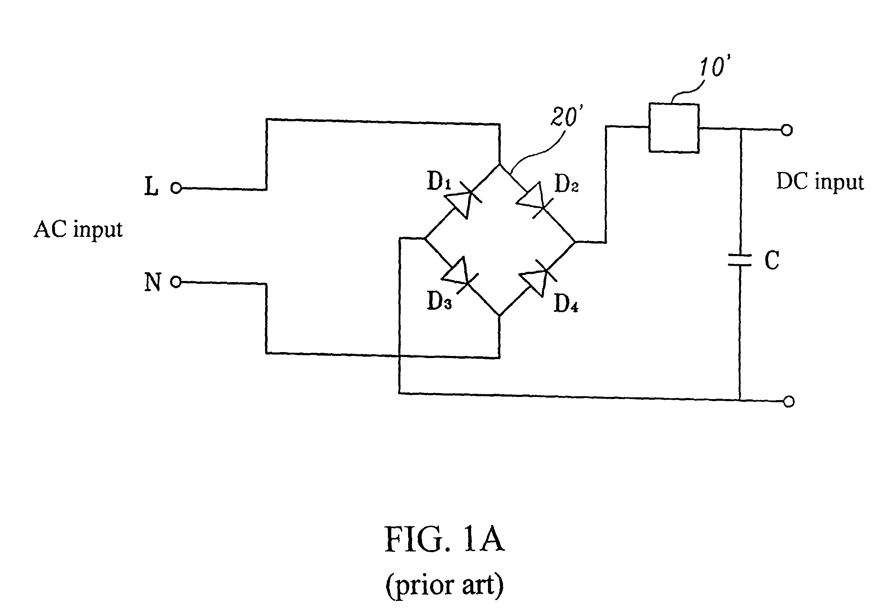

Due to the fast development in modern electric/electronic industry as well as the increasing awareness in security and environmental protection, regulations concerning security and environmental protection for electric/electronic products have become so indispensable that various kinds of regulations concerning security and environmental protection have been proposed. The design of power supplies is also required to meet the regulations approved by international electric/electronic associations. For instance, since Jan. 1st. 2001. EN61000-3-2 will be valid to suppress human and environmental damages from high-frequency harmonic. In other words, all the electric/electronic products with the input power range from tens of watts to hundreds of watts such as TVs, PCs, monitors and many other professional power supplies will be regulated by the limitations provided by EN61000-3-2. Therefore, in order to meet EN61000-3-2, the industry employs an active power factor corrector (to be abbreviated as "PFC" hereinafter) arranged in power supply design. Please refer to FIG. 1A, which is a schematic circuit diagram showing a conventional active PFC of a power supply in the prior art. As shown in the drawing, the active PFC 10' which is a pre-regulator composed of a control IC, a transformer, a switching circuit, diodes and so on is serially interposed between a bridge rectifier (composed of diodes D1, D2, D3 and D4) 20' and a filter capacitor C so as to suppress high-frequency harmonic caused by the filter capacitor C of the power supply during alternate-current (AC) charging process. The use of such an active PFC 10' can achieve optimal high-frequency harmonic suppression, however, these switching components easily induce serious electromagnetic interference (EMI) and other interference on the screen of the display products since the active PFC 10' executes the switching operation at high frequencies. In addition, because the high-frequency carrier waves are controlled by an IC chip inside the active PFC, the unavoidable high cost makes it in lack of commercial competitivity, leading to another problem of the conventional PFC.

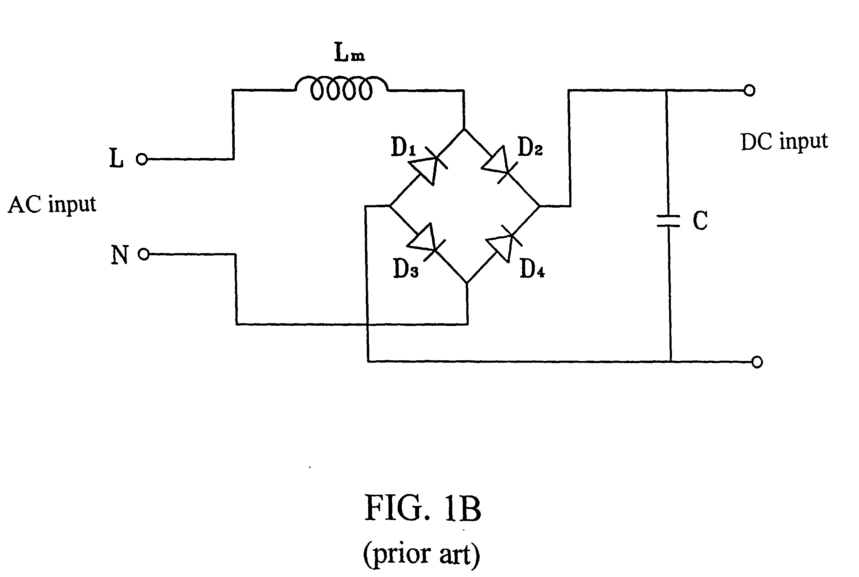

In order to overcome the above problems, the industry has provided a passive PFC, as shown in FIG. 1B, wherein an inductor Lm is interposed between AC input and a bridge rectifier (composed of diodes D1, D2, D3 and D4) 20' so as to suppress high-frequency harmonic caused by the filter capacitor C of the power supply during AC charging process. Such a passive PFC can solve the problems that an active PFC has suffered. Nevertheless, the provided AC supply varies in different countries and regions, for instance, 100 V in Japan and 230 V in Europe. Therefore, an inductor Lm1 is used to match the provided AC supply in Japan when products are to be exported to Japan, while another inductor Lm2 is used to match the provided AC supply in Europe when products are to be exported to Europe. In accordance with the experimental data, when the provided AC supply is 100 V (in Japan, for instance), the applicable high-frequency harmonic limitation range is 2.3 times the range as in the case of a provided AC supply of 230 V and is relatively more flexible to meet EN61000-3-2. In the result, the minimum inductance required to meet EN61000-3-2 for an AC supply of 100 V is about 10 mH. On the other hand, when the provided AC supply is 230 V (in Europe, for instance), the minimum inductance required to meet EN61000-3-2 for an AC supply of 230 V is expected to be 40 mH.

Accordingly, an electric product designed to meet EN61000-3-2 in different countries and regions can be exported not only to the countries where the provided AC supply is smaller, as exemplified by Japan, and also to the regions where the provided AC supply is larger, as exemplified by Europe. However, such an electric product has its inherent difficulty. To begin with, the supply that provides an AC voltage of 100 V has a larger current and thus requires an inductor Lm1 with a wire of lager cross-sectional area, while the supply that provides an AC voltage of 230 V has a larger inductance and thus requires an inductor Lm2 with a wire of more circular loops. The latter inductor Lm2 has a large resistance in the wire and may result in a serious problem related to the voltage drop across the filter capacitor when it is used in the regions where the provided AC supply is 100 V. In other words, the latter inductor Lm2 is not suitable for use in the region where the provided AC supply is 100 V, such as Japan. Consequently, the above mentioned electric product must have two inductors with different inductance values inside the same device, and then one of the two inductors can be determined to be chosen according the provided AC supply, with the other inductor left unused. It does not only leads to undesirable waste of resource but also leads to increase space occupied by the internal components, which has adverse effect on product design.

Accordingly, to overcome the problems appearing in the conventional PFC. there is a need for developing a novel apparatus and method thereof, wherein said apparatus does not need to change the inductor for high-frequency harmonic suppression due to the different input AC voltages in different countries or regions, and can suppress EMI generation and reduce the cost.

### SUMMARY OF THE INVENTION

It is therefore a main object of the present invention to provide a switching power factor correction apparatus and method thereof, characterized in that two identical inductors arranged symmetrically inside an power supply are switched to be connected serially or in parallel according to the input voltage value so as to obtain a desirable inductance value and thereby suppress high-frequency harmonic to meet EN61000-3-2 or other security and environmental protection regulations.

It is another object of the present invention to provide a switching power factor correction apparatus and method thereof, wherein there is provided, at the input terminal of said apparatus, a source voltage detection device for detecting the value of said input voltage so that said switching power factor correction apparatus can properly switch the connection configuration of said two inductors so as to achieve the object of changing the total inductance value of said inductor set according to the AC voltage in the local area..

It is a further object of the present invention to provide a switching power factor correction apparatus and method thereof, wherein there is only an inductor set composed of two inductors required so that said apparatus is applicable in regions providing different AC voltages. Unlike the conventional PFC in which two independent inductors are arranged, the two inductors in the inductor set of the present invention are employed together. Therefore, the employment of present invention can downsize the apparatus, prevent the waste of resources, and reduce the fabrication cost.

### BRIEF DESCRIPTION OF THE DRAWINGS

The objects, spirits and advantages of the preferred embodiments of the present invention will be readily understood by the accompanying drawings and detailed descriptions, wherein:
FIG. 1A is a schematic circuit diagram showing a conventional active PFC of a power supply in the prior art;
FIG. 1B is a schematic circuit diagram showing a conventional passive PFC of a power supply in the prior art;
FIG. 2 is a schematic block diagram showing a switching power factor correction apparatus in accordance with one preferred embodiment of the present invention;
FIG. 3 is a flow chart showing a method for power factor correction in accordance with one preferred embodiment of the present invention;
FIG. 4 is a detailed circuit showing a switching power factor correction apparatus in accordance with one preferred embodiment of the present invention;
FIG. 5 is a detailed circuit showing a switching power factor correction apparatus in accordance with another embodiment of the present invention;
FIG. 6A and FIG. 6B are respectively a bar graph and an alternate current/voltage waveform plot showing the AC (100 V) high-frequency harmonic of a power supply without a switching power factor correction apparatus of the present invention installed;
FIG. 6C and FIG. 6D are respectively a bar graph and an alternate current/voltage waveform plot showing the AC (230 V) high-frequency harmonic of a power supply without a switching power factor correction apparatus of the present invention installed;
FIG. 7A and FIG. 7B are respectively a bar graph and an alternate current/voltage waveform plot showing the AC (100 V) high-frequency harmonic of a power supply with a switching power factor correction apparatus of the present invention installed; and
FIG. 7C and FIG. 7D are respectively a bar graph and an alternate current/voltage waveform plot showing the AC (230 V) high-frequency harmonic of a power supply with a switching power factor correction apparatus of the present invention installed.

### DETAILED DESCRIPTION OF THE INVENTION

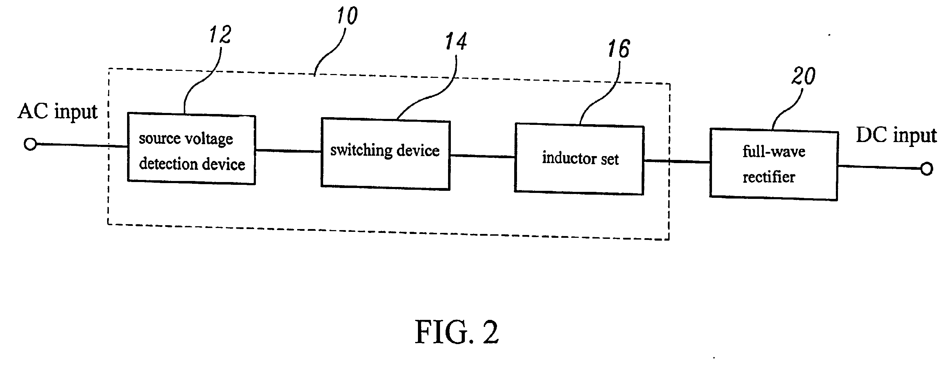

To begin with, please refer to FIG. 2, which is a schematic block diagram showing a switching power factor correction apparatus in accordance with one preferred embodiment of the present invention. As shown in the drawing, said power factor correction apparatus 10 comprises a source voltage detection device 12 for detecting the input AC voltage provided in the local area; a switching device 14 connected to the output of said source voltage detection device 12 and switched to select the connection configuration between at least two inductors of an inductor set 16 according to the received AC voltage, wherein said two inductors of said inductor set 16 are made of wires with the same cross-sectional area and the same number of circular loops, arranged symmetrically at the both ends of a iron core. Certainly, said inductor set can be replaced by two independent inductors. When an input AC voltage is transmitted into said power factor correction apparatus 10 and a full-wave rectifier 20 and then converted as a DC output, the total inductance of said power factor correction apparatus 10 can be properly changed according to the input AC voltage, so that the high-frequency harmonic generated during AC charging in the power supply can be suppressed.

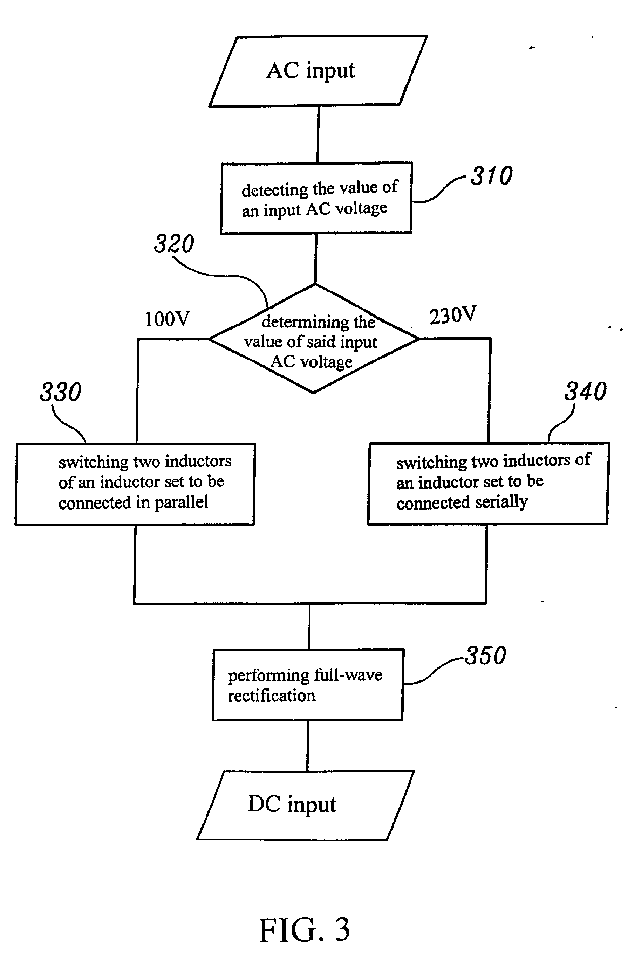

In addition, please refer to FIG. 3, which is a flow chart showing a method for power factor correction in accordance with one preferred embodiment of the present invention. As shown in the drawing, when an input AC voltage is transmitted into said power factor correction apparatus 10, the value of said input AC voltage is detected by said source voltage detection device 12, as shown in step 310; the detected value of said input AC voltage is determined to be 100 V or 230 V, as shown in step 320; if the value obtained from step 320 is 100 V, the method proceeds to step 330, wherein said switching device 14 switches said two inductors of said inductor set 16 to be connected in parallel and the total inductance becomes 10 mH if the inductance of said each inductor is 20 mH, which is applicable in Japan; if the value obtained from step 320 is 230 V, the method proceeds to step 340, wherein said switching device 14 switches said two inductors of said inductor set 16 to be serially connected and the total inductance becomes 40 mH if the inductance of said each inductor is 20 mH, which is applicable in Europe; and finally, full-wave rectifier 20 applies full-wave rectification to said input AC voltage, as shown in step 350.

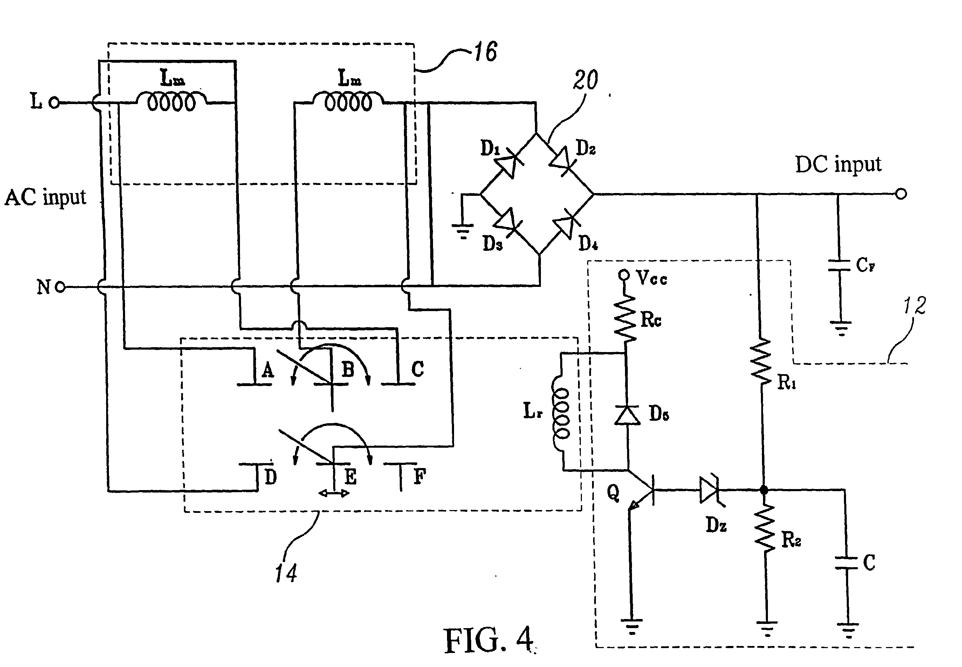

Moreover, please refer to FIG. 4, which is a detailed circuit showing a switching power factor correction apparatus in accordance with one preferred embodiment of the present invention. As shown in the drawing, after input though an input terminal L (N), an AC voltage is applied to a source voltage detection device 12, wherein said AC voltage is divided by two serially connected resistors R1 and R2 and then controlled by a Zener diode Dz. If the divided value of said AC voltage (for example. 230 V) is higher than a pre-determined voltage Vz of said Zener diode Dz (for example, 150 V), said Zener diode Dz is turned on and a transistor Q is also turned on. Then, a switching device 14 composed of a two-pole-two-throw relay or other switch is electrically triggered. Said switching device 14 is pre-set with terminals A and B being connected and terminals D and E being connected (as illustrated by the clockwise arrows). In other words, said two inductors Lm of said inductor set 16 are pre-set to be connected in parallel. Therefore, after an inductor Lr is electrically triggered, said switching device 14 is set with terminals B and C being connected and terminals E and F being connected (as illustrated by the counter-clockwise arrows). Meanwhile, said two inductors Lm of said inductor set 16 are immediately set to be serially connected, resulting in a total inductance of 2 Lm, which is applicable in the regions where the provided AC supply is larger, as exemplified by Europe, where the provided AC supply is 230 V. Finally, said processed AC voltage is given full-wave bridge rectification by a full-wave bridge rectifier (composed of diodes D1, D2, D3 and D4) and a filter capacitor Cp, and is then delivered to a load as a DC voltage.

Furthermore, said two inductors Lm of said inductor set 16 are pre-set to be connected in parallel, resulting in a total inductance of 1/2 Lm. When said apparatus as shown in FIG. 4 is used in the regions where the provided AC supply is smaller, as exemplified by Japan, where the provided AC supply is 100 V, each of said Zener diode Dz and said transistor Q is not turned on, and consequently said inductor Lr is not triggered to provide a electric signal to activate said switching device 14 and the connection configuration of said inductors of said inductor set 16 remains unchanged. Moreover, when the input AC voltage is 100 V, the current is equally divided into the inductors connected in parallel and the wire having a smaller cross-sectional area can be used so that the required size of the iron core can be minimized, resulting in a relatively downsized apparatus.

In addition, unlike the conventional PFC in which only one of the two independent inductors is used and the other is left unused, the two inductors in the inductor set of the present invention can be employed together regardless of the provided AC voltage being 100 V or 230 V. Therefore, the apparatus of present invention is more commercially advantageous in view of size and fabrication cost.

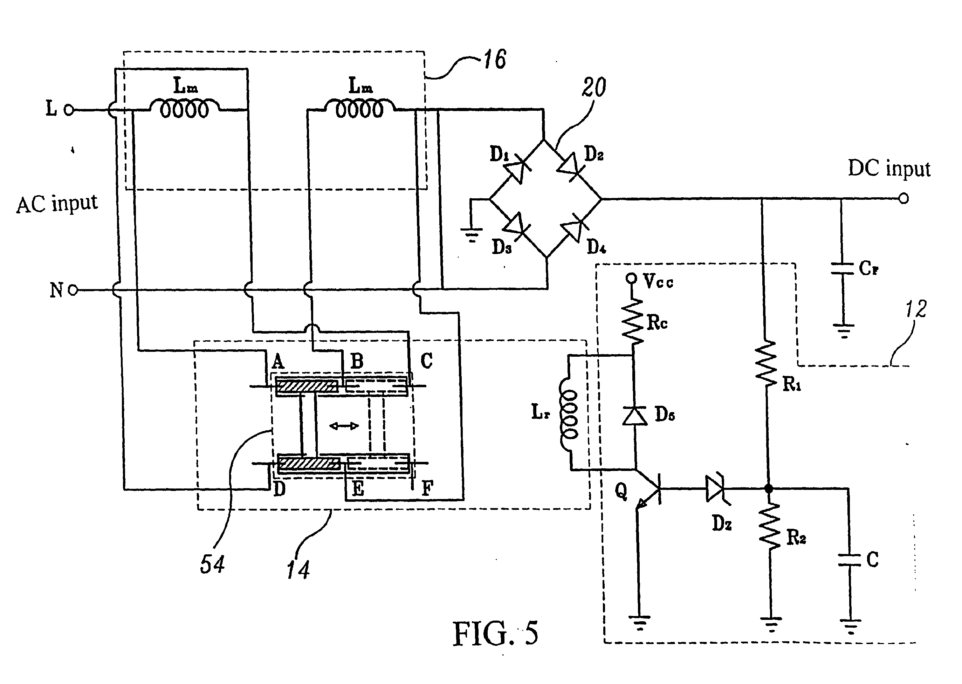

Needless to say, according to the present invention, the function of said source voltage detection device 12 can be replaced by users' judgment, and thereby said switching device 14 can be replaced by a manual switching device 54, which enables the users to manually select the connection configuration (terminal B being connected to terminal A or terminal C, and terminal E being connected to terminal D or terminal F) in response to the provided AC voltage in the individual region. Such a circuit as shown in FIG. 5 can be employed to achieve the foregoing objects.

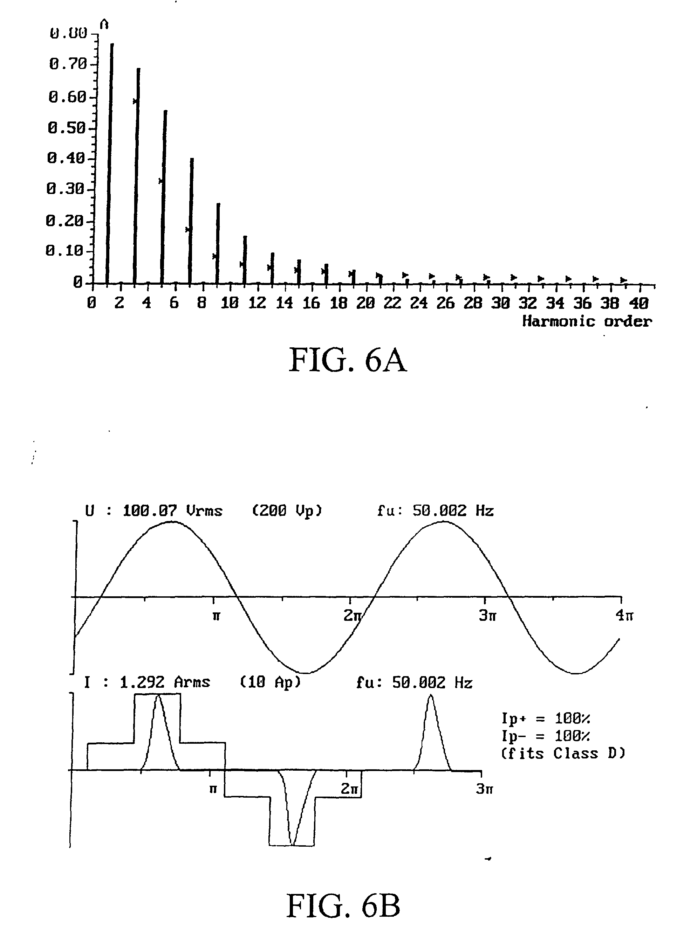

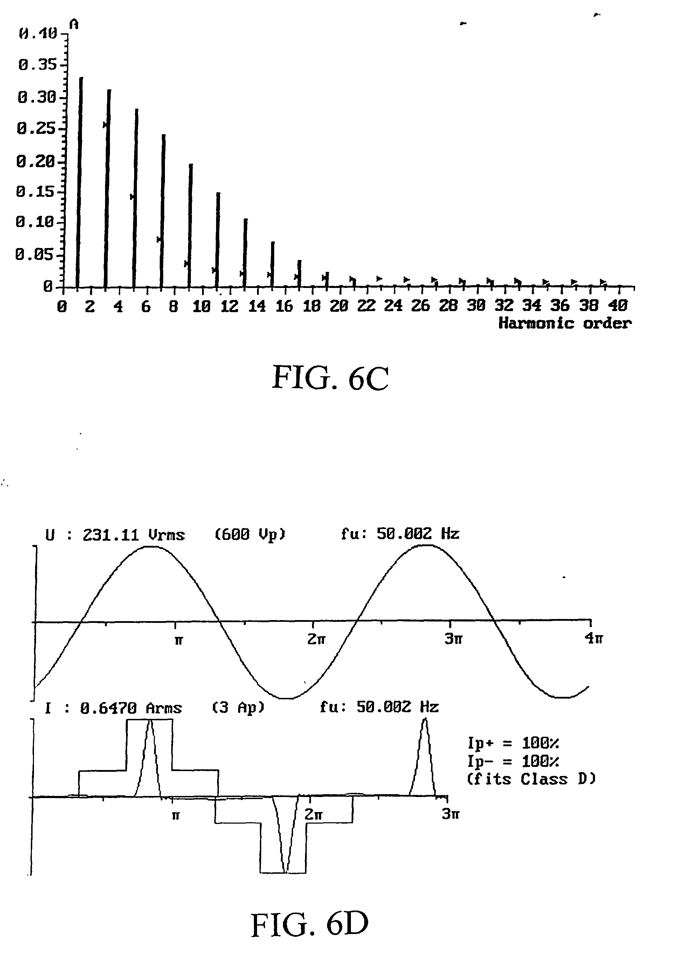

Finally, please refer to FIG. 6A to FIG. 7D, which are respective bar graphs and alternate current/voltage waveform plots showing the AC high-frequency harmonic of a power supply before and after a switching power factor correction apparatus of the present invention is installed. Fig. 6A shows a bar graph of a power supply when the AC voltage is 100 V and the switching power factor correction apparatus of the present invention is not installed. In the drawing, * represents the high-frequency harmonic limit of power supplies in Japan, while the each of the bars denote the measured high-frequency harmonic. As can been seen, the measured high-frequency harmonic at any harmonic order overpasses the security limit and do not meet the regulation. In FIG. 6B the upper part shows the input AC voltage waveform, which is a perfect sine wave, and the lower part shows the input AC current waveform which has peaks that are narrower and higher and is inconsistent with the input AC voltage waveform, resulting in greater intensity of high-frequency harmonic. Similarly, FIG. 6C and FIG. 6D are respectively a bar graph and an alternate current/voltage waveform plot of a power supply when the AC voltage is 230 V (for instance, in Europe) and the switching power factor correction apparatus of the present invention is not installed. Such a power supply also fails to meet EN61000-3-2.

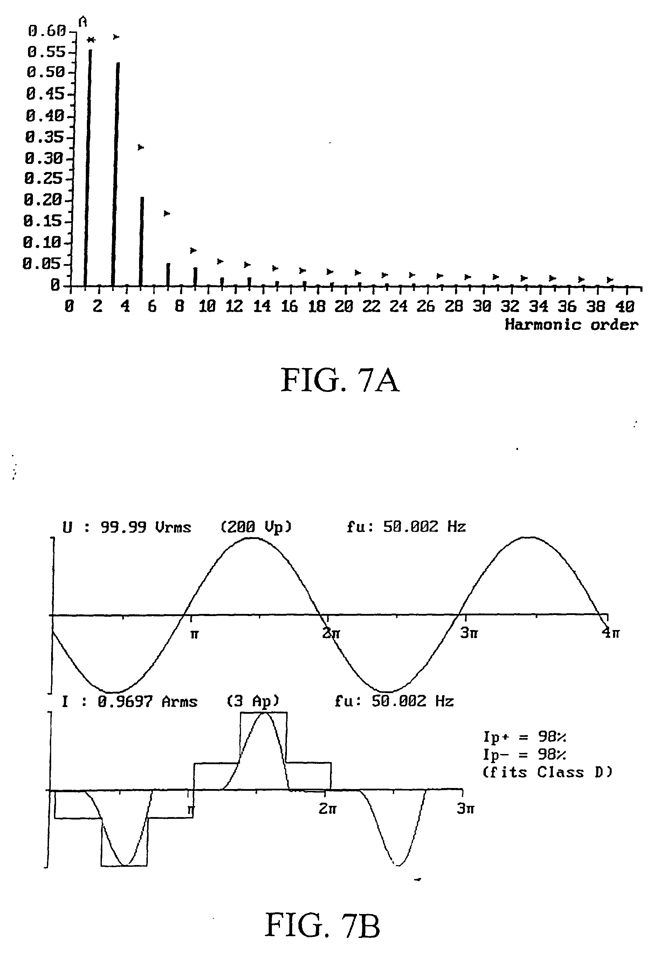

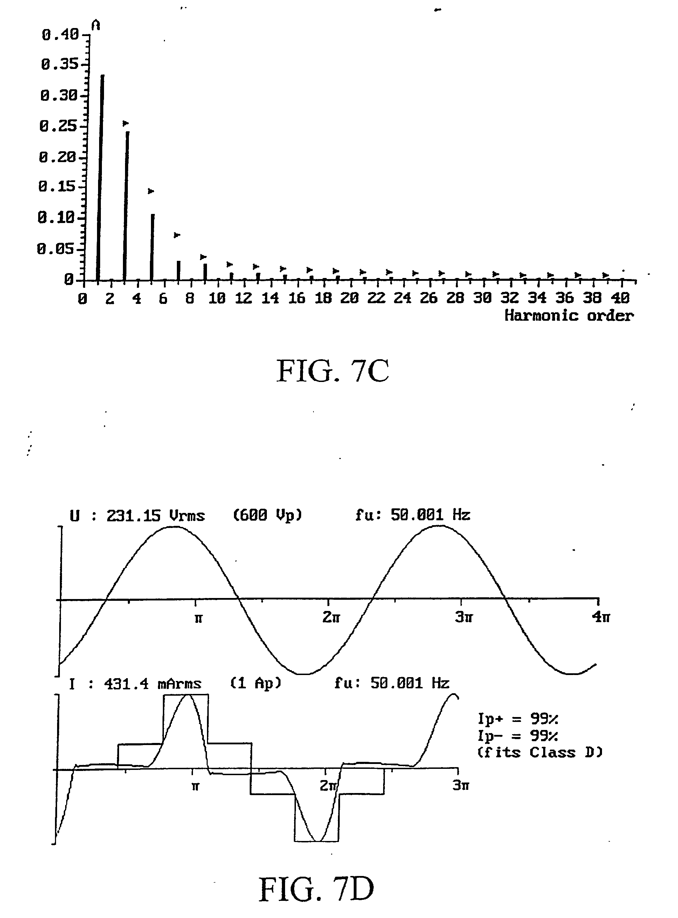

On the contrary, FIG. 7A and 7B are respectively a bar graph and an alternate current/voltage waveform plot of a power supply when the AC voltage is 100 V (for instance, in Japan) and the switching power factor correction apparatus of the present invention is installed. It is found in the drawings that, even at the 39th harmonic order, the high-frequency harmonic is still lower than the limit according to the local security and environmental regulations; in addition, the input AC current waveform matches the input AC voltage relatively more. Therefore, it can greatly suppress the high-frequency harmonic. Similarly, FIG. 7C and FIG. 7D are respectively a bar graph and an alternate current/voltage waveform plot of a power supply when the AC voltage is 230 V (for instance, in Europe) and the switching power factor correction apparatus of the present invention is installed. Such a power supply also meets EN61000-3-2.

As discussed so far, in accordance with the present invention, there is provided a switching power factor correction apparatus and method thereof, in which the connection configuration between two inductors is automatically switched according to different input voltage levels. The inductor device does not need to be replaced according to different input AC voltages for AC high-frequency harmonic suppression. Such an apparatus is suitable for EMI elimination, downsizing and fabrication cost reduction. Consequently, the present invention has been examined to be progressive and has great potential in commercial applications.

Although this invention has been disclosed and illustrated with reference to particular embodiments, the principles involved are susceptible for use in numerous other embodiments that will be apparent to persons skilled in the art. This invention is, therefore, to be limited only as indicated by the scope of the appended claims.

## Claims

1. A switching power factor correction apparatus, comprising:
an inductor set composed of at least two identical inductors arranged symmetrically at the both ends of a iron core, wherein the output of said inductor set is connected to a full-wave rectifier; and
a switching device with the input terminal receiving an input voltage and the output terminal being connected to said inductor set, wherein the switching operation of said switching device is used to determine said two inductors of said inductor set to be connected in parallel or serially.

2. The switching power factor correction apparatus as recited in claim 1, wherein said two inductors of said inductor set is switched to be connected serially when the value of said input voltage is higher than a pre-determined value and connected in parallel when the value of said input voltage is lower than a pre-determined value.

3. The switching power factor correction apparatus as recited in claim 1, further comprising a source voltage detection device connected said switching device, so as to automatically detect the value of said input voltage and provide said switching device an electric signal.

4. The switching power factor correction apparatus as recited in claim 3, wherein said source voltage detection device includes at least two serially connected resistors, further connected to a Zener diode and a transistor, which are turned on to generate an electric signal when the value of said input voltage is higher than a pre-determined value.

5. The switching power factor correction apparatus as recited in claim 1, wherein said switching device is a two-pole-two-throw relay.

6. The switching power factor correction apparatus as recited in claim 1, wherein said switching device is a manual switching device.

7. The switching power factor correction apparatus as recited in claim 1, wherein said inductor set is replaced by two independent inductors.

8. A method for power factor correction, comprising the steps of:
(a). detecting the value of an input AC voltage;
(b). operating a switching device according to the value of said input AC voltage; and
(c). switching two inductors of an inductor set to be connected in parallel or serially according to the operation of said switching device.

9. The method as recited in claim 8, wherein in said step (a), the value of said input AC voltage is automatically detected by a source voltage detection device.

10. The method as recited in claim 8, wherein in said step (a), the value of said input AC voltage is manually set.

11. The method as recited in claim 10, wherein in said step (b), said switching device is manually operated.

12. The method as recited in claim 8, wherein said steps (b) and (c) further includes the steps of:
determining whether the value of said input AC voltage is higher than a pre-determined value;
if yes, switching said two inductors of said inductor set to be connected serially by operating said switching device; and
otherwise, switching said two inductors of said inductor set to be connected in parallel by operating said switching device.
